# EUROPÄISCHE PATENTSCHRIFT

(11) **EP 2 554 429 B1**
(45) Veröffentlichungstag und Bekanntmachung des Hinweises auf die Patenterteilung: **19.11.2014**
(21) Anmeldenummer: 12166012.0
(22) Anmeldetag: 27.04.2012
(51) Int. Cl.: B60N 2/18

(54) **Fahrzeugsitz mit einer Sitzneigungsstellvorrichtung und Verfahren zum Betrieb eines Fahrzeugsitzes mit einer Sitzneigungsstellvorrichtung**
Vehicle seat with a seat angle adjustment device and method for operating a vehicle seat with a seat angle adjustment device
Siège de véhicule avec dispositif de réglage de l'inclinaison du siège et procédé de fonctionnement d'un siège de véhicule avec un dispositif de réglage de l'inclinaison du siège

(30) Priorität: 05.08.2011 DE 102011109554
(43) Veröffentlichungstag der Anmeldung: 06.02.2013
(73) Patentinhaber: Johnson Controls GmbH, 51399 Burscheid (DE)
(72) Erfinder: Fischer, Jutta, 51063 Köln (DE); Olmeo, Enrico, 50825 Köln (DE); Labuwy, Cornel, 42857 Remscheid (DE)
(74) Vertreter: Liedtke, Markus

(56) Entgegenhaltungen:
- DE-A1-102010 029 121
- DE-U1- 29 814 448
- GB-A- 2 065 464
- GB-A- 2 298 786
- JP-A- S5 795 224
- US-A1- 2010 148 532

## Beschreibung

Die Erfindung betrifft einen Fahrzeugsitz mit einer Sitzneigungsstellvorrichtung gemäß dem Oberbegriff des Patentanspruchs 1. Weiterhin betrifft die Erfindung ein Verfahren zum Betrieb eines Fahrzeugsitzes mit einer Sitzneigungsstellvorrichtung gemäß dem Oberbegriff des Patentanspruchs 8.

Üblicherweise sind bei einem Fahrzeugsitz ein Neigungswinkel und eine Sitzhöhe einer Sitzfläche verstellbar. Dabei können Neigungswinkel und Sitzhöhe manuell oder mittels einer elektrisch betriebenen Sitzneigungsstellvorrichtung einstellbar und veränderbar sein. Oft kommt zur elektrisch betriebenen Höhenverstellung oder zur Sitzneigungsverstellung ein Spindelantrieb zum Einsatz.

Aus der gattungsgemäßen GB 2 065 464 A ist eine elektrisch betriebene Sitzneigungsstellvorrichtung bekannt, deren Antriebseinheit unterhalb einer Sitzfläche innenseitig an einem Sitzrahmen angeordnet ist.

Der Erfindung liegt die Aufgabe zugrunde, einen gegenüber dem Stand der Technik verbesserten Fahrzeugsitz mit einer Sitzneigungsstellvorrichtung und einer Antriebseinheit und ein verbessertes Verfahren zum Betrieb eines Fahrzeugsitzes mit einer Sitzneigungsstellvorrichtung anzugeben. Hinsichtlich des Fahrzeugsitzes mit einer Sitzneigungsstellvorrichtung wird die Aufgabe erfindungsgemäß durch die im Anspruch 1 angegebenen Merkmale gelöst.

Hinsichtlich des Verfahrens zum Betrieb eines Fahrzeugsitzes mit einer Sitzneigungsstellvorrichtung wird die Aufgabe erfindungsgemäß durch die im Anspruch 8 angegebenen Merkmale gelöst.

Vorteilhafte Ausgestaltungen der Erfindung sind Gegenstand der Unteransprüche.

Beim Fahrzeugsitz mit einer Sitzneigungsstellvorrichtung, die zumindest eine Antriebseinheit umfasst, sind die Sitzneigungsstellvorrichtung und die Antriebseinheit erfindungsgemäß innenseitig an einem Sitzrahmenseitenelement eines Fahrzeugsitzes und unterhalb eines Sitzflächenelements des Fahrzeugsitzes angeordnet. Damit wird der zur Verfügung stehende Bauraum unterhalb des Fahrzeugsitzes optimal genutzt. Insbesondere ist die Verwendung eines Spindelmotors vermieden, der zur Verstellung eines Sitzneigungswinkels der Sitzfläche eine Spindel antreibt. Dieser Spindelmotor benötigt typischerweise einen großen Bauraum. Darüber hinaus ist die Spindel bei Betrieb großen Kräften ausgesetzt, was zu einem erhöhten Verschleiß und entsprechender verringerter Lebensdauer führt.

Des Weiteren ergeben sich durch die Ausnutzung des Bauraums im unterseitigen Bereich des Fahrzeugsitzes Vorteile bei der Montage, die besonders einfach und schnell durchgeführt werden kann, womit Kosten bei der Herstellung des Fahrzeugsitzes und somit des gesamten Fahrzeugs eingespart sind.

Durch die Nutzung des Bauraums im unterseitigen Fahrzeugsitzbereich für die Sitzneigungsstellvorrichtung und deren Antriebseinheit ist insbesondere Bauraum eingespart, der sich an einer Außenseite des Fahrzeugsitzes befindet. Dieser außenseitige Bauraum kann deshalb genutzt werden, um eine weitere, manuelle Sitzneigungsstellvorrichtung von außen anzubringen. Dadurch ist ein modularer Aufbau ermöglicht.

Erfindungsgemäß ist die Antriebseinheit mittels eines Stützelements am Sitzrahmenseitenelement angeordnet. Dadurch kann ein bestehendes Sitzrahmenseitenelement ohne aufwendige Neukonstruktion mit einer erfindungsgemäß ausgebildeten Sitzneigungsstellvorrichtung ausgerüstet werden. Weiterhin erfindungsgemäß weist das Stützelement einen Stützarm auf, der eine Verbindungsstrebe des Fahrzeugsitzes, die mit dem Sitzrahmenseitenelement verbunden ist, unterseitig umgreift.

Das Stützelement ist bevorzugt mittels zumindest einer kraft-, form-, und/oder stoffschlüssigen Verbindung am Sitzrahmenseitenelement angeordnet. Eine solche Verbindung verhindert im Falle eines Unfallereignisses ein Ablösen des Stützelements vom Sitzrahmenseitenelement und eine daraus resultierende Verletzungsgefahr für die Fahrzeuginsassen.

Die Antriebseinheit ist zweckmäßigerweise an dem Stützelement mittels zumindest einer kraft- und/oder formschlüssigen Verbindung angeordnet und besonders bevorzugt ist die Antriebseinheit mittels zumindest einer reversibel lösbaren Verbindung an dem Stützelement angeordnet. Auf diese Weise ist eine leichte Montage und Demontage der Antriebseinheit ermöglicht, so dass beispielsweise eine defekte Antriebseinheit mit geringem Aufwand austauschbar ist.

An der Verbindungsstrebe des Fahrzeugsitzes ist bevorzugt ein Zahnsegment drehfest und kraft-, form- und/oder stoffschlüssig angeordnet.

Besonders bevorzugt ist ein Abtriebszahnrad der Antriebseinheit korrespondierend zum Zahnsegment ausgebildet und steht mit diesem in Wirkverbindung.

In einer besonders vorteilhaften Ausführungsform ist das Zahnsegment in einem zwischen Stützelement und Sitzrahmenseitenelement gebildeten Zwischenraum angeordnet oder ragt in diesen hinein. Dies ermöglicht eine Abdeckung und/oder Abstützung des Zahnsegments im Falle eines Unfallereignisses.

Beim Verfahren zum Betrieb eines Fahrzeugsitzes mit einer solchen Sitzneigungsstellvorrichtung wird mittels einer elektro-mechanischen Antriebseinheit eine Sitzneigungsstellvorrichtung aktuiert, wobei die Sitzneigungsstellvorrichtung und die Antriebseinheit innenseitig an einem Sitzrahmenseitenelement eines Fahrzeugsitzes und unterhalb eines Sitzflächenelements des Fahrzeugsitzes angeordnet sind.

Anhand der beigefügten schematischen Figuren wird die Erfindung näher erläutert.

Dabei zeigen:
- Figur 1: schematisch einen Ausschnitt eines Fahrzeugsitzes mit einer Sitzneigungsstellvorrichtung und einer Antriebseinheit,
- Figur 2: schematisch einen Ausschnitt eines Fahrzeugsitzes mit einem Stützelement und einem Zahnsegmentelement einer Sitzneigungsstellvorrichtung.

Einander entsprechende Teile sind in allen Figuren mit den gleichen Bezugszeichen versehen.

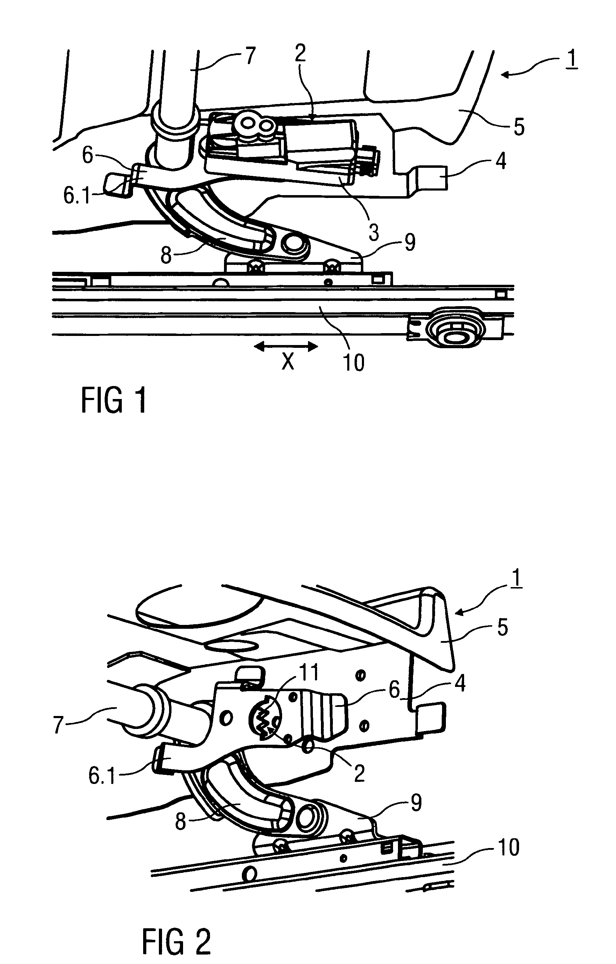

Figur 1 zeigt in einer perspektivischen Ansicht einen Ausschnitt eines Fahrzeugsitzes 1 mit einer Sitzneigungsstellvorrichtung 2, die eine Antriebseinheit 3 umfasst. Die Sitzneigungsstellvorrichtung 2 und die Antriebseinheit 3 sind innenseitig an einem Sitzrahmenseitenelement 4 eines Fahrzeugsitzes 1 und unterhalb eines Sitzflächenelements 5 des Fahrzeugsitzes 1 angeordnet. Damit ist der unterhalb des Fahrzeugsitzes 1 zur Verfügung stehende Bauraum zur Höhenverstellung genutzt.

Das Sitzflächenelement 5 und das Sitzrahmenseitenelement 4 sind miteinander mittels üblicher kraft-, form- und/oder stoffschlüssiger Verbindungen, wie beispielsweise Niet-, Schraub und/oder Schweißverbindungen, verbunden.

Ein blechförmiges Stützelement 6 ist mit dem Sitzrahmenseitenelement 4 mittels üblicher kraft-, form- und/oder stoffschlüssiger Verbindungen, wie beispielsweise Niet-, Schraub- und/oder Schweißverbindungen, verbunden. Die elektrisch betriebene Antriebseinheit 3 ist an dem Stützelement 6 mittels einer kraft- und/oder formschlüssigen Verbindung und insbesondere einer Schraubverbindung angebracht.

Das Stützelement 6 weist einen Stützarm 6.1 auf, der eine Verbindungsstrebe 7, die mit dem Sitzrahmenseitenelement 4 verbunden ist, unterseitig umgreift.

Der Fahrzeugsitz 1 ist mittels der Verbindungsstrebe 7, eines Schwenkarms 8 und eines Befestigungselements 9 an einer Befestigungsschiene 10 befestigt, so dass der Fahrzeugsitz 1 parallel zu einer Längsrichtung x verschiebbar ist. Der Schwenkarm 8 ist derart schwenkbar gelagert, dass insbesondere ein Sitzneigungswinkel und eine Sitzhöhe des Sitzflächenelements 5 veränderbar sind.

Zur Verstellung des Sitzneigungswinkels ist ein Drehmoment der Antriebseinheit 3 auf die Verbindungsstrebe 7 übertragbar. Dazu ist ein Zahnsegment 11, wie in Figur 2 gezeigt, mit der Verbindungsstrebe 7 kraft- und/oder formschlüssig verbunden. Einer möglichen Ausbildung der Erfindung zufolge ist das Zahnsegment 11 mit der Verbindungsstrebe 7 vercrimpt.

Figur 2 zeigt in einer perspektivischen Ansicht einen Ausschnitt des Fahrzeugsitzes 1 mit der Sitzneigungsstellvorrichtung 2, wobei zur besseren Darstellung des Zahnsegments 11 die Antriebseinheit 3 nicht dargestellt ist. Auf die Verbindungsstrebe 7 ist mittels des Zahnsegments 11 der Sitzneigungsstellvorrichtung 2 das auf das Zahnsegment 11 übertragene Drehmoment übertragbar, um den Sitzneigungswinkel des Sitzflächenelements 5 bezüglich der Längsrichtung x zu verändern.

Das Zahnsegment 11 ist von dem Stützelement 6 teilweise verdeckt. Das Stützelement 6 dient im Falle einer Kollision des Fahrzeugs dazu, das Zahnsegment 11 abzustützen, um eine ungewollte Veränderung des Sitzneigungswinkels des Sitzflächenelements 5 zu vermeiden.

### Bezugszeichenliste

- 1: Fahrzeugsitz
- 2: Sitzneigungsstellvorrichtung
- 3: Antriebseinheit
- 4: Sitzrahmenseitenelement
- 5: Sitzflächenelement
- 6: Stützelement
- 6.1: Stützarm
- 7: Verbindungsstrebe
- 8: Schwenkarm
- 9: Befestigungselement
- 10: Befestigungsschiene
- 11: Zahnsegment
- x: Längsrichtung

## Patentansprüche

1. Fahrzeugsitz (1) mit einer Sitzneigungsstellvorrichtung (2), die zumindest eine Antriebseinheit (3) umfasst, wobei die Sitzneigungsstellvorrichtung (2) und die Antriebseinheit (3) innenseitig an einem Sitzrahmenseitenelement (4) eines Fahrzeugsitzes (1) und unterhalb eines Sitzflächenelements (5) des Fahrzeugsitzes (1) angeordnet sind, **dadurch gekennzeichnet, dass**
- die Antriebseinheit (3) mittels eines Stützelements (6) am Sitzrahmenseitenelement (4) angeordnet ist, und
- das Stützelement (6) einen Stützarm (6.1) aufweist, der eine Verbindungsstrebe (7) des Fahrzeugsitzes (1), die mit dem Sitzrahmenseitenelement (4) verbunden ist, unterseitig umgreift.

2. Fahrzeugsitz (1) nach Anspruch 1,
**dadurch gekennzeichnet, dass** das Stützelement (6) mittels zumindest einer kraft-, form- und/oder stoffschlüssigen Verbindung am Sitzrahmenseitenelement (4) angeordnet ist.

3. Fahrzeugsitz (1) nach Anspruch 1 oder 2,
**dadurch gekennzeichnet, dass** die Antriebseinheit (3) an dem Stützelement (6) mittels zumindest einer kraft- und/oder formschlüssigen Verbindung angeordnet ist.

4. Fahrzeugsitz (1) nach einem der vorherigen Ansprüche,
**dadurch gekennzeichnet, dass** die Antriebseinheit (3) mittels zumindest einer reversibel lösbaren Verbindung an dem
Stützelement (6) angeordnet ist.

5. Fahrzeugsitz (1) nach einem der vorherigen Ansprüche,
**dadurch gekennzeichnet, dass** an der Verbindungsstrebe (7) ein Zahnsegment (11) drehfest und kraft-, form- und/oder stoffschlüssig angeordnet ist.

6. Fahrzeugsitz (1) nach Anspruch 5,
**dadurch gekennzeichnet, dass** ein Abtriebszahnrad der Antriebseinheit (3) korrespondierend zum Zahnsegment (11) ausgebildet ist und mit diesem in Wirkverbindung steht.

7. Fahrzeugsitz (1) nach Anspruch 5 oder 6,
**dadurch gekennzeichnet, dass** das Zahnsegment (11) in einem zwischen Stützelement (6) und Sitzrahmenseitenelement (4) gebildeten Zwischenraum angeordnet ist oder in diesen hineinragt.

8. Verfahren zum Betrieb eines Fahrzeugsitzes (1) mit einer Sitzneigungsstellvorrichtung (2) nach einem der vorherigen Ansprüche, **dadurch gekennzeichnet, dass** die Antriebseinheit eine elektro-mechanische Antriebseinheit (3) ist, mittels derer die Sitzneigungsstellvorrichtung (2) aktuiert wird, wobei die Sitzneigungsstellvorrichtung (2) und die Antriebseinheit (3) innenseitig an einem Sitzrahmenseitenelement (4) eines Fahrzeugsitzes (1) und unterhalb eines Sitzflächenelements (5) des Fahrzeugsitzes (1) angeordnet sind.

## Claims

1. Vehicle seat (1) with a seat angle adjustment device (2) which comprises at least one drive unit (3), wherein the seat angle adjustment device (2) and the drive unit (3) are arranged on the inner side of a seat frame side element (4) of a vehicle seat (1) and below a seat surface element (5) of the vehicle seat (1), **characterized in that**
- the drive unit (3) is arranged on the seat frame side element (4) by means of a supporting element (6), and
- the supporting element (6) has a supporting arm (6.1) which engages around the lower side of a connecting strut (7) of the vehicle seat (1), which connecting strut is connected to the seat frame side element (4).

2. Vehicle seat (1) according to Claim 1, **characterized in that** the supporting element (6) is arranged on the seat frame side element (4) by means of at least one frictional, interlocking and/or integrally bonded connection.

3. Vehicle seat (1) according to Claim 1 or 2, **characterized in that** the drive unit (3) is arranged on the supporting element (6) by means of at least one frictional and/or interlocking connection.

4. Vehicle seat (1) according to one of the preceding claims, **characterized in that** the drive unit (3) is arranged on the supporting element (6) by means of at least one reversibly releasable connection.

5. Vehicle seat (1) according to one of the preceding claims, **characterized in that** a toothed segment (11) is arranged on the connecting strut (7) for rotation therewith and in a frictional, interlocking and/or integrally bonded manner.

6. Vehicle seat (1) according to Claim 5, **characterized in that** an output gear wheel of the drive unit (3) is formed in a corresponding manner to the toothed segment (11) and is operatively connected thereto.

7. Vehicle seat (1) according to Claim 5 or 6, **characterized in that** the toothed segment (11) is arranged in an intermediate space formed between supporting element (6) and seat frame side element (4) or projects into said intermediate space.

8. Method for operating a vehicle seat (1) with a seat angle adjustment device (2) according to one of the preceding claims, **characterized in that** the drive unit is an electromechanical drive unit (3), by means of which the seat angle adjustment device (2) is actuated, wherein the seat angle adjustment device (2) and the drive unit (3) are arranged on the inner side of a seat frame side element (4) of a vehicle seat (1) and below a seat surface element (5) of the vehicle seat (1).

## Revendications

1. Siège de véhicule (1) comprenant un dispositif de réglage de l'inclinaison du siège (2), lequel dispositif de réglage comporte au moins une unité d'entraînement (3),
le dispositif de réglage de l'inclinaison du siège (2) et l'unité d'entraînement (3) étant disposés du côté intérieur sur un élément latéral de cadre de siège (4) d'un siège de véhicule (1) et en dessous d'un élément de surface de siège (5) du siège de véhicule (1),
**caractérisé en ce que**
- l'unité d'entraînement (3) est disposée sur l'élément latéral de cadre de siège (4) au moyen d'un élément de support (6), et
- l'élément de support (6) comprend un bras de support (6.1) qui vient en prise du côté inférieur autour d'une barre de liaison (7) du siège de véhicule (1) qui est reliée à l'élément latéral de cadre de siège (4).

2. Siège de véhicule (1) selon la revendication 1, **caractérisé en ce que** l'élément de support (6) est disposé sur l'élément latéral de cadre de siège (4) au moyen d'au moins une liaison par engagement par force, d'une liaison par engagement par complémentarité de formes et/ou par liaison de matière.

3. Siège de véhicule (1) selon la revendication 1 ou 2,
**caractérisé en ce que** l'unité d'entraînement (3) est disposée sur l'élément de support (6) au moyen d'au moins une liaison par engagement par force et/ou par complémentarité de formes.

4. Siège de véhicule (1) selon l'une quelconque des revendications précédentes,
**caractérisé en ce que** l'unité d'entraînement (3) est disposée sur l'élément de support (6) au moyen d'au moins une liaison libérable de manière réversible.

5. Siège de véhicule (1) selon l'une quelconque des revendications précédentes,
**caractérisé en ce qu'**un segment denté (11) est disposé sur la barre de liaison (7) de manière bloquée en rotation et par engagement par force, par engagement par complémentarité de formes et/ou par liaison de matière.

6. Siège de véhicule (1) selon la revendication 5, **caractérisé en ce qu'**une roue dentée de sortie de l'unité d'entraînement (3) est réalisée de manière à correspondre au segment denté (11) et est en liaison fonctionnelle avec celui-ci.

7. Siège de véhicule (1) selon la revendication 5 ou 6,
**caractérisé en ce que** le segment denté (11) est disposé dans un espace intermédiaire formé entre l'élément de support (6) et l'élément latéral de cadre de siège (4) ou pénètre dans cet espace intermédiaire.

8. Procédé de fonctionnement d'un siège de véhicule (1) comprenant un dispositif de réglage de l'inclinaison du siège (2) selon l'une quelconque des revendications précédentes,
**caractérisé en ce que** l'unité d'entraînement est une unité d'entraînement électromécanique (3), au moyen de laquelle le dispositif de réglage de l'inclinaison du siège (2) est actionné,
le dispositif de réglage de l'inclinaison du siège (2) et l'unité d'entraînement (3) étant disposés du côté intérieur sur un élément latéral de cadre de siège (4) d'un siège de véhicule (1) et en dessous d'un élément de surface de siège (5) du siège de véhicule (1).
